# EUROPEAN PATENT APPLICATION

(11) **EP 3 012 687 A1**
(43) Date of publication of application: **27.04.2016**
(21) Application number: 15190890.2
(22) Date of filing: 21.10.2015
(51) Int. Cl.: G03B 17/53, G03B 35/08, G03B 37/04, H04N 5/225, H04N 5/232

(54) **MULTI CAMERA PHOTO BOOTH WITH THREE-DIMENSIONAL EFFECT AND ITS OPERATION METHOD**

(30) Priority: 23.10.2014 ES 201431562
(71) Applicant: Digital Centre, S.L., 08243 Manresa (Barcelona) (ES)
(72) Inventor: TARRÉS BOLÓS, Josep, 08243 MANRESA (Barcelona) (ES)
(74) Representative: Morgades y Manonelles, Juan Antonio

(57) **Abstract**

The invention refers to a multi-camera photo booth that allows images of the user to be captured from different positions and angles in a synchronized manner, to create a three-dimensional effect in the final product delivered to the user, using more than one piece of image-capturing equipment and processing equipment that allows the capturing of the images to be synchronized, all of which is adapted into modules for installation inside of a normal photo booth, as well as in photo booths that are open to the outside, or independent modules.

## Description

### Object of the Invention.

Specifically, the invention refers to a photo booth, like those used to take photos of the users, and which are used independently inside of a normal photo booth, as well as in photo booths open to the outside or independent modules.

### State of the Art.

Among the state-of-the-art photo booths there are various types of photo booths, like the ones that are booths, where there is a single camera that takes the photograph of the user.

There are also photo booths without booths, like those described in Spanish invention patent no. 201490047, belonging to the same holder, DIGITAL CENTRE SL, which also has a single piece of image-capturing equipment that focuses on the user and which is used to take the image that the user later will handle.

These types of known photo booths have as a product a normal strip of photographs, which only allows images to be taken from an established, fixed position.

### Description of the Invention.

The present invention is for the purpose of having a multi-camera photo booth that allows images to be taken from different positions and angles in a synchronized manner, to create a three-dimensional effect in the final product that the user receives, and that this module can be joined to a conventional photo booth or that it is in itself an independent photo booth, joined or mounted on a structure that supports it and/or moves and that allows it to perform the usual functions of a photo booth.

The multi-camera photo booth that comprises the present invention has at least two pieces of image-capturing equipment, which focus on the position of the user from different angles and positions, and which can be used to take an image of the aforementioned user from at least these two different positions and angles, with these images forming part of the final product. These two pieces of image-capturing equipment are integrated into a supporting structure that fixes the position and direction of said equipment. The body or panels of the photo booth can be used as a supporting structure.

The multi-camera photo booth has at least one piece of image-processing equipment, although preferably there is one piece of processing equipment for each one of the pieces of image-capturing equipment, so that the processing speed of the images captured is quicker, allowing the final product to be delivered to the user in a short period of time, ensuring more reliably that the synchronization is exact, due to the lighter load of processing that they would have as compared with a single processing unit. In this case of multiple pieces of processing equipment, all of them are linked to a main processor, which manages all of them, as well as the synchronization of the image-capturing equipment.

The supporting structure, which contains the image-capturing equipment, may have means to be joined to a conventional photo booth, whether as a replacement for the conventional image-capturing equipment, or in addition to the conventional camera that an existing photo booth has, and which allows the user to choose between the two photo booth products, or also to be used as an outside photo booth without an associated covered booth, and which takes images of the users in front of it openly, attached to the outside of a photo booth, or joined to a holding structure that is open to the outside, which will allow it to be operated like an independent, transportable photo booth.

In the multi-camera photo booth supporting structure, the image-capturing equipment is preferably integrated into the usual means of seeing images in photo booths, so that users can see the result of their photographs, as well as a sample of the actions or functions that the photo booth can perform, and in this way it can operate as an independent module. When this integration is performed, the change can be made using the existing connections currently in many photo booths, with hardly any cost in changing the photo booth, so that the photo booths are improved, and at a minimal cost.

In the multi-camera photo booth, the image-capturing equipment can be aligned or aimed in any direction, so that it is possible to achieve a three-dimensional effect both in a transition of images that follow a horizontal plane and those on a vertical plane, and in another type of configuration in space, even a non-linear one, following a distribution between the set of unaligned cameras, as if they were placed on a non-linear surface.

The lighting of the multi-camera photo booth is advantageous characterized in that it has a means of direct lighting that provides a homogenous level of light for all of the angles of focus of the various pieces of image-capturing equipment, so that the images that are taken at each one of the angles have the same level of lighting. It's also possible to have a system of ambient or diffuse, auxiliary lighting in order to eliminate possible shadows that may appear at the different angles and positions where the photographs have been taken.

The synchronization of the capturing of images is the fundamental feature in order to be able to capture images at the same moment from all of the pieces of image-capturing equipment.

The procedure that the multi-camera photo booth follows is based on the fact that once the order has been given to start the photographing process, the processing equipment that manages all of the image-capturing equipment, or each one of the pieces of processing equipment associated with the image-capturing equipment gives the order to capture images at the same time on each piece of equipment.

The images obtained at every moment are preferably classified by the instant when they were obtained, and therefore, upon seeing the images of each of the pieces of image-capturing equipment in the order chosen, we will have images that show a three-dimensional effect from the observation point, that is to say, as if a camera had moved at the same instant when time was "frozen."

Alternatively, the process for the capturing of photographs, besides the photography indicated, can also make a video shot, both in the moments prior to the capturing of images chosen by the user, and in the moments after it, and which will be used to be able to offer the user a variety of related products, as well as images with a three-dimensional effect.

In order to achieve a completely three-dimensional effect, the processing equipment has transition software to approximate the images that are not available between two consecutive cameras.

The photo booth can dispose of modules for communicating with outside servers, or computer/telephone communication with mobile devices where the final product can be delivered, printing devices or connection to them, and it can be installed with the usual services that other photo booths have.

In this manner, the owner would have a photo booth that offers a product that is totally unknown in the state of the art of all of the current photo booths, starting from a configuration of the photo booth itself that is also totally unknown, introducing multiple cameras and introducing the necessary supports, suitable lighting to correctly obtain multiple, synchronized images, and processing equipment, and the rest of the features and procedures necessary to obtain the new product indicated.

Other details and characteristics shall be shown throughout the description below referring to drawings attached to this report which are shown for illustrative but not limiting purposes only in a drawing of the invention.

### Description of the drawings.

Figure 1 is a top plan view of the usual photo booth, which has the multi-camera module joined to it.
Figure 2 is a side elevation perspective view of the photo booth with the multi-camera module joined to it.

### Description of an embodiment of the invention.

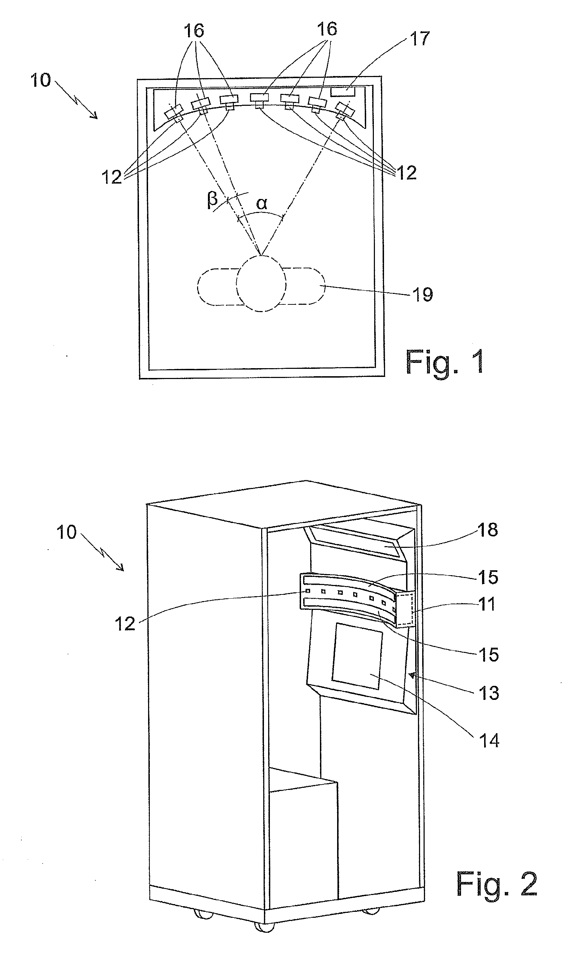

In one of the preferred embodiments of this invention, the multi-camera photo booth (10) is made up of a supporting structure (11) that fixes the position of seven cameras (12) in different positions and with different angles of vision of the user (as can be seen in Figures 1 and 2), which are those in charge of capturing the images of the user.

The position of the cameras (12) in the supporting structure (11) is such that all of them are aimed at the theoretical position of the user in the photo booth (10) itself, spread out in an arc forming an angle (α), and they are spread out homogenously over the length of this arc (α), preferably with an angle (β) of 10° between the cameras (12). The structure has a means for fixing the cameras (12) in such a manner that once they have been placed in their position and with the proper orientation, these cameras are attached to said supporting structure (11), so that the number of cameras, their position and orientation can be altered whenever desired.

Alternatively, photo booths (10) with only 2 cameras can be made, keeping an angle (β) between the cameras (12) that is greater than 30°, but preferably the alternative embodiments will have at least a front camera and two lateral ones, forming an angle (β) of between 1° and 30° between the cameras (12).

Each one of the cameras (12) has a Raspberry Pi-type processor (16) connected to each one of them, which will handle the operation of the camera (12) that it is connected to, as well as each one of the images and/or videos obtained from said camera. Alternatively, it could also be a piece of processing equipment (16) that isn't so compact, and using PC or similar computers. There is another piece of processing equipment that is the main one (17), and which the other processing equipments (16) are connected to, and it handles the synchronization of the capturing of images of each one of the cameras (12). This processing equipment (16) is also installed in the supporting structure (11).

Alternatively, it could also be that it has a single piece of processing equipment that can handle the management of all of the cameras and that it synchronizes the taking of images and/or videos.

The supporting structure (11) with all of the components installed, oriented and fixed cameras (12), and connected processing equipments, are joined to a photo booth module body (13) that includes a space to house said structure (11), and for it to have a screen (14) to see images and control the photo booth (10). This photo booth module (13) is joined to a conventional photo booth by replacing the conventional module with a single camera for capturing images. Alternatively, this module (13) can also be added to the conventional camera in order to have two products at the same time in the same photo booth, so that the client can choose one or both of them at the same time.

The supporting structure (11), and more specifically, the cameras (12), can be arranged with different orientations to get a different effect, although preferably, as shown in this embodiment, they are placed horizontally. Alternatively, the placement of the cameras (12) can also be vertical or tilted, following a straight or curved line.

The multi-camera photo booth (10) has a system of direct lighting (15) with light sources, light bulbs, LEDs or similar that project light at least in the same angles as the image-capturing cameras (12). In this embodiment, this direct lighting system (15) is integrated into the supporting structure (11) so that it accompanies the cameras (12) and can be integrated into the module (13). In other alternative embodiments, this lighting system (15) is integrated into the photo booth module (13) so that it can be joined to any existing photo booth.

The multi-camera photo booth (10) has an auxiliary lighting system (18) to eliminate possible shadows that appear on the user (19) at the time that the photographs are taken from all of the different angles and positions. This effect is achieved using ambient or diffuse lighting over all of the photography area, in this case the booth, eliminating the shadows that can be created by direct lighting means (15), thanks to a system of diffusion through translucent methacrylate. The auxiliary lighting system (18) can also be integrated into the module (13), or it can be independent and mounted on the booth or the structure that goes with it.

In another alternative embodiment, the supporting structure (11) with all of the components installed, oriented and fixed cameras (12), and connected processing equipments, are installed in a body that can be installed in an independent structure to form an open photo booth that is entirely exterior and transportable. This alternative embodiment can also be joined to the exterior bodies of photo booths that have enough room in the bodies, giving the traditional photo booth another photo booth system.

In a further alternative embodiment, the supporting structure (11) includes a greater number of cameras and covers a wider angle (α), greater than the measurements of a conventional photo booth, so that the structure can be folded to make it smaller for transportation or storage, usually using hinges that join the different parts into which said structure (11) has been divided.

The procedure for operating the multi-camera photo booth (10) is started by the user, whether by payment, identification, etc. After the possible choices of possible options of products, configurations, and other options that the user can choose have been made on the screen (14), when the images are taken, the processing equipment (17) that coordinates the rest of the processing equipments (16) connected to the cameras (12) gives the order to capture the image to all of the cameras (12) at the same time, in a synchronized manner.

The images obtained simulate a freezing of time and a movement of the camera along the arc (α) at that moment of frozen time, creating a three-dimensional effect.

The photo booth can produce a product that uses software to make a transition between images to make a video that gives continuity to each of the images taken, as if at the moment that time was frozen, a video camera had moved along an arc (α), and said images and/or videos can be shown on the screen (14).

Besides the capturing of images, the main processor can activate simultaneously the video recording of all of the cameras (12) and in a synchronized manner, at the moment that is determined, whether by the user or by the management application installed in the machine.

The delivery of the product is made in the usual manners of printing the different photographs taken, and with the advantage of having a product with a three-dimensional effect; it sends the images that form the sequence directly or through an outside server, and they can be treated with the software for the transition between images to make them more continuous, or not.

The photo booth will have the means for the printing, communication, identification, payment, etc. necessary for the operation of the usual features, or it will have connections to be able to provide all of these services if it is working as an independent module.

Finally, it has a computer program that is in charge of executing the procedure of simultaneously capturing images, using the right lighting for the activation of direct (15) and auxiliary (18) means, and providing the user (19) with the result on the screen (14) or on a device for seeing it or a mobile device.

Having sufficiently described this invention using the drawings attached, it is easy to understand that any modification may be made to the detail which may be deemed to be appropriate, whenever these changes do not alter the essence of the invention summarised in the following claims:

## Claims

1. **"MULTI-CAMERA PHOTO BOOTH WITH A THREE-DIMENSIONAL EFFECT",** which obtains images of the users that use it, **characterised in that** the multi-camera photo booth comprises at least two pieces of image-capturing equipment, which focus on the position of the user from at least two different positions of the photo booth and also from different angles in relation to the user, to take images of the aforementioned user.

2. **"MULTI-CAMERA PHOTO BOOTH WITH A THREE-DIMENSIONAL EFFECT"** according to the claim 1, **characterised in that** the pieces of image-capturing equipment are integrated into a supporting structure, so that it fixes their position and orientation, and the number of pieces of equipment and their position can vary, due to action on the means of attaching said image-capturing equipment that the supporting structure has.

3. **"MULTI-CAMERA PHOTO BOOTH WITH A THREE-DIMENSIONAL EFFECT"** according to the claim 1, **characterised in that** the photo booth has a processing equipment for each piece of image-capturing equipment, and said image-capturing and processing equipments are connected to a main processor.

4. **"MULTI-CAMERA PHOTO BOOTH WITH A THREE-DIMENSIONAL EFFECT"** according to the claims 1 and 2, **characterised in that** in the photo booth there are pieces of image-capturing equipments installed homogenously over the arc of the supporting structure at intervals of 1° to 30° from the theoretical position of the user.

5. **"MULTI-CAMERA PHOTO BOOTH WITH A THREE-DIMENSIONAL EFFECT"** according to the claim 2, **characterised in that** the supporting structure containing the image-capturing equipments and the processing equipments, has means to be joined to a conventional photo booth.

6. **"MULTI-CAMERA PHOTO BOOTH WITH A THREE-DIMENSIONAL EFFECT"** according to the claim 2, **characterised in that** the supporting structure containing the image-capturing equipments and the processing equipments, has means to be joined to an independent, open structure.

7. **"MULTI-CAMERA PHOTO BOOTH WITH A THREE-DIMENSIONAL EFFECT"** according to the claim 2, **characterised in that** the supporting structure has a number of pieces of image-capturing equipments covering an angle greater than the size of the photo booth, and it has a folding mechanism to make it smaller.

8. **"MULTI-CAMERA PHOTO BOOTH WITH A THREE-DIMENSIONAL EFFECT"** according to the claims 1, 2, 5, 6, 7 and 8, **characterised in that** the supporting structure containing the image-capturing equipments and the processing equipments, is integrated into a way to see images, forming a photo booth module that can replace existing photo booth modules with a single camera.

9. **"MULTI-CAMERA PHOTO BOOTH WITH A THREE-DIMENSIONAL EFFECT"** according to the claim 1, **characterised in that** the photo booth has a means of direct lighting that includes light sources that light up at least the same angles that are positioned in the image-capturing equipments.

10. **"MULTI-CAMERA PHOTO BOOTH WITH A THREE-DIMENSIONAL EFFECT"** according to the claim 1, **characterised in that** the photo booth has an auxiliary lighting system that eliminates shadows, as it is diffuse, ambient lighting.

11. **"METHOD FOR OPERATING A MULTI-CAMERA PHOTO BOOTH WITH A THREE-DIMENSIONAL EFFECT"** like that described in the claims 1 to 16 is **characterised in that** at the moment that the images are taken, the main processor that handles the image-capturing equipments gives the order to capture the images, it gives the order to take the image to all of the image-capturing equipment at the same time, in a synchronized manner.

12. **"METHOD FOR OPERATING A MULTI-CAMERA PHOTO BOOTH WITH A THREE-DIMENSIONAL EFFECT"** according to the claim 17, **characterised in that** the main processor activate simultaneously the video recording of all of the cameras and in a synchronized manner, at the moment that is determined, whether by the user or by the management application installed in the machine.

13. **"METHOD FOR OPERATING A MULTI-CAMERA PHOTO BOOTH WITH A THREE-DIMENSIONAL EFFECT"** according to the claim 17, **characterised in that** the sequence of images with a three-dimensional effect is sent to an outside viewing device through a communication means.

14. **"COMPUTER PROGRAM"** executed by the processing equipment, and which at least carries out the steps described in claims 17 to 20, **characterised in that** it contains a code that is adapted to perform at least the steps of:
- User identification.
- Activating the necessary means of lighting.
- Ordering the capturing of synchronized images from each piece of image-capturing equipments.
- Gathering all of the images, referenced by time and position.
- Sending the sequence to the user through the communication means.

15. **"COMPUTER PROGRAM"** according to the claim 21 **characterised in that** it comprises an additional program for transition between images.
